# EUROPEAN PATENT APPLICATION

(11) **EP 4 657 558 A1**
(43) Date of publication of application: **03.12.2025**
(21) Application number: 24817827.9
(22) Date of filing: 08.11.2024
(51) Int. Cl.: H01M 4/36, H01M 10/0525, H01M 4/525, H01M 4/62

(54) **POSITIVE ELECTRODE MATERIAL AND PREPARATION METHOD THEREFOR, POSITIVE ELECTRODE SHEET AND SECONDARY BATTERY**

(30) Priority: 15.04.2024 CN 202410451889
(71) Applicant: Tianjin B&M Science And Technology Co., Ltd., Tianjin 300384 (CN)
(72) Inventor: JI, Changyin, Tianjin 300384 (CN); ZHANG, Xiaoyun, Tianjin 300384 (CN); WANG, Kai, Tianjin 300384 (CN); LV, Fei, Tianjin 300384 (CN); XU, Ning, Tianjin 300384 (CN)
(74) Representative: Ström & Gulliksson AB
(86) International application number: PCT/CN2024/130819
(87) International publication number: WO 2025/218152

(57) **Abstract**

The present application provides a positive electrode material and a preparation method thereof, a positive electrode plate and a secondary battery. The positive electrode material comprises a first lithium nickel oxide material, the first lithium nickel oxide material comprises a polycrystalline particle, and the porosity inside the polycrystalline particle is denoted as d, 2%≤d≤15%; in any CP cross-section of the polycrystalline particle, the distance between two adjacent pore edges inside the polycrystalline particle is 10nm to 100nm. Thus, the cracking ratio of the positive electrode material during the processing of the electrode plate can be reduced, and the initial stress and the stress accumulation of the new surface generated by the cracking during the cycle process can be significantly reduced, and the particle toughness and particle strength are improved. Meanwhile, sufficient support can be provided for the rigid structure of the material, and the collapse and crushing of the material particles can be reduced. Therefore, the stability of the bulk phase and the surface is improved at the material level, and the long-term cycle performance and safety performance of the material are improved.

## Description

This application claims priority to Chinese Patent Application No. 202410451889.9, titled "POSITIVE ELECTRODE MATERIAL AND PREPARATION METHOD THEREOF, POSITIVE ELECTRODE PLATE AND SECONDARY BATTERY", filed on April 15, 2024 with the China National Intellectual Property Administration, which is incorporated herein by reference in its entirety.

### FIELD

The present disclosure relates to the field of lithium-ion battery technology, and in particular to a positive electrode material and a preparation method thereof, a positive electrode plate and a secondary battery.

### BACKGROUND

At present, lithium-ion battery technology is developing rapidly, and electric vehicles using lithium-ion batteries are gradually becoming popular, bringing new solutions to problems such as environmental pollution and climate warming. In recent years, the market demand for electric vehicle range has increased significantly, and high-energy-density high-nickel materials have gradually become a research hotspot.

Among the high-nickel materials, lithium nickel cobalt manganese oxide is widely used. Although this material has a high energy density, its long-term cycle performance and safety performance are poor and need to be improved.

### SUMMARY

Based on the above, the present application provides a positive electrode material and a preparation method thereof, a positive electrode plate and a secondary battery, so as to simultaneously improve the long-term cycle performance and safety performance of the positive electrode material.

In a first aspect, the present application provides a positive electrode material, comprising a first lithium nickel oxide material, where the first lithium nickel oxide material contains a polycrystalline particle, and a porosity inside the polycrystalline particle is denoted as d, 1%≤d≤15%; in any CP cross-section of the polycrystalline particle, a distance between two adjacent pore edges inside the polycrystalline particle is 5nm to 100nm.

In some embodiments, the positive electrode material comprises a first lithium nickel oxide material, the first lithium nickel oxide material contains a polycrystalline particle, and a porosity inside the polycrystalline particle is denoted as d, 2%≤d≤15%; in any CP cross-section of the polycrystalline particle, a distance between two adjacent pore edges inside the polycrystalline particle is 10nm to 100nm.

In some embodiments, the polycrystalline particle comprises at least one of the following features (1) to (3):
(1) the polycrystalline particle comprises a plurality of primary particles;
   optionally, in any CP cross-section of the polycrystalline particle, an angle between a direction of a long diameter of each primary particle and a direction of a diameter of the polycrystalline particle is 0° to 90°, optionally, 0° to 30°;
   optionally, each primary particle has a particle size of 200nm to 800nm;
(2) the polycrystalline particle is in a single particle strength of > 90Mpa;
(3) the polycrystalline particle is in a deformation of < 21% before rupture.

In some embodiments, the first lithium nickel oxide material comprises at least one of the following features (1) to (3):
(1) the first lithium nickel oxide material has a chemical formula of Liₐ₁Niₓ₁Co_{y1}Mn_{z1}Q1ᵤ₁O₂, where 0.98≤a1≤1.60, 0.80≤x1≤1.00, 0.00≤y1≤0.12, 0.00≤z1≤0.10, 0≤u1≤0.007, and Q1 element is a doping element;
   optionally, the Q1 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum;
   optionally, 0.98≤a1≤1.05, 0.82≤x1≤1.00, 0.00≤y1≤0.08, 0.00≤z1≤0.06, 0.0001≤u1≤0.005;
(2) the first lithium nickel oxide material has a median particle size of 9µm to 17µm;
(3) a specific surface area of the first lithium nickel oxide material is denoted as A1, and after being fractured at a pressure of 4.5T, a specific surface area of the first lithium nickel oxide material is denoted as A2, (A2-A1)/A1×100%≤40%.

In some embodiments, the positive electrode material further comprises a second lithium nickel oxide material, where the second lithium nickel oxide material contains a single crystal particle or a quasi-single crystal particle;
optionally, the first lithium nickel oxide material and the second lithium nickel oxide material in the positive electrode material are in a mass ratio of 1 to 10.

In some embodiments, the second lithium nickel oxide material comprises at least one of the following features (1) to (2):
(1) the second lithium nickel oxide material has a chemical formula of Liₐ₂Niₓ₂Co_{y2}Mn_{z2}Q2ᵤ₂O₂, where 0.98≤a2≤1.60, 0.80≤x2≤1.00, 0.00≤y2≤0.12, 0.00≤z2≤0.10, 0≤u2≤0.007, and Q2 element is a doping element;
   optionally, the Q2 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum;
   optionally, 0.98≤a2≤1.05, 0.82≤x2≤1.00, 0.00≤y2≤0.08, 0.00≤z2≤0.06, 0.0001≤u2≤0.005;
(2) the second lithium nickel oxide material has a median particle size of 0.5µm to 6µm.

In a second aspect, the present application provides a method for preparing the positive electrode material of the first aspect of the present application, comprising the following steps:
subjecting a first mixed material comprising a first lithium source, a first nickel-containing precursor, a first molten salt and an optional Q1 source to a first sintering treatment to prepare the first lithium nickel oxide material;
where a total molar amount of metal contained in the first molten salt and a total molar amount of metal contained in the first nickel-containing precursor are in a ratio of 0.005 to 0.08.

In some embodiments, the method comprises at least one of the following conditions:
(1) the first molten salt has a melting point of 400°C to 1400°C, optionally 400°C to 1000°C; the first molten salt has a cation comprising one or more of alkali metal and alkaline earth metal, and the first molten salt has an anion comprising acid radical ion;
   optionally, the first molten salt comprises one or more of lithium sulfate, lithium antimonate, lithium silicate, lithium selenate, and lithium phosphate;
(2) the first lithium source comprises one or more of lithium hydroxide, lithium carbonate, lithium nitrate, lithium oxalate, and lithium acetate;
(3) the first nickel-containing precursor has a chemical formula of [Niₓ₃Co_{y3}Mn_{z3}](OH)₂, where 0.80≤x3≤1.00, 0.00≤y3≤0.12, 0.00≤z3≤0.10;
(4) the first nickel-containing precursor has a median particle size of 9µm to 17µm;
(5) a total molar amount of metal contained in the first molten salt and the first lithium source and a total molar amount of metal contained in the first nickel-containing precursor is in a ratio of 1.02 to 1.08;
(6) the Q1 source comprises one or more of oxides, hydroxides, carbonates, phosphates, and nitrates containing the Q1 element; the Q1 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium, and tantalum;
(7) the first sintering treatment comprises a first sintering platform and a second sintering platform, a sintering temperature of the second sintering platform and a sintering temperature of the first sintering platform have a positive temperature difference of ≥200°C, and a sintering time of the second sintering platform and a sintering time of the first sintering platform has a positive time difference of ≥1h;
   optionally, the first sintering platform is carried out at the sintering temperature of 550°C to 750°C for 3h to 5h;
   optionally, the second sintering platform is carried out at the sintering temperature of 750°C to 900°C for 6h to 15h;
(8) when the first mixed material does not contain the Q1 source or only contains a part of the Q1 source, the method further comprises: mixing an intermediate product obtained by the first sintering treatment with the Q1 source, and then continuing the sintering treatment at 200°C to 350°C for 3h to 5h.

In some embodiments, the method further comprises:
subjecting a second mixed material comprising a second lithium source, a second nickel-containing precursor, a second molten salt and an optional Q2 source to a second sintering treatment to prepare the second lithium nickel oxide material; where the second nickel-containing precursor has a median particle size smaller than the median particle size of the first nickel-containing precursor;
where, a total molar amount of metal contained in the second molten salt and a total molar amount of metal contained in the second nickel-containing precursor is in a ratio of 0.005 to 0.08;
optionally, the second molten salt has a melting point of 400°C to 1400°C, optionally 400°C to 1000°C; the second molten salt has a cation comprising one or more of alkali metal and alkaline earth metal, and the second molten salt has an anion comprising acid radical ion;
optionally, the second molten salt comprises one or more of lithium sulfate, lithium antimonate, lithium silicate, lithium selenate, and lithium phosphate;
optionally, the second lithium source comprises one or more of lithium hydroxide, lithium carbonate, lithium nitrate, lithium oxalate, and lithium acetate;
optionally, the second nickel-containing precursor has a chemical formula of [Niₓ₄Co_{y4}Mn_{z4}](OH)₂, where 0.80≤x4≤1.00, 0.00≤y4≤0.12, and 0.00≤z4≤0.10;
optionally, the second nickel-containing precursor has a median particle size of 0.5µm to 6µm;
optionally, a total molar amount of metal contained in the second molten salt and the second lithium source and a total molar amount of metal contained in the second nickel-containing precursor are in a ratio of 1.02 to 1.08;
optionally, the Q2 source comprises two or more of oxides, hydroxides, carbonates, phosphates, and nitrates containing the Q2 element; the Q2 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum;
optionally, when the second mixed material does not contain the Q2 source or only comprises a part of the Q2 source, the method further comprises: mixing an intermediate product obtained by the second sintering treatment with the Q2 source, and then continuing the sintering treatment at 200°C to 350°C for 3h to 5h;
optionally, the second sintering treatment comprises a third sintering platform and a fourth sintering platform, a sintering temperature of the fourth sintering platform and a sintering temperature of the third sintering platform have a positive temperature difference of ≥200°C, and a sintering time of the fourth sintering platform and a sintering time of the third sintering platform have a positive time difference of ≥1h;
optionally, the third sintering platform is carried out at the sintering temperature of 550°C to 750°C for 3h to 5h;
optionally, the fourth sintering platform is carried out at the sintering temperature of 800°C to 950°C for 6h to 15h.

In a third aspect, the present application provides a positive electrode plate, comprising the positive electrode material of the first aspect of the present application or the positive electrode material prepared by the method of the second aspect of the present application.

In a fourth aspect, the present application provides a secondary battery, comprising the positive electrode plate of the third aspect of the present application.

In a fifth aspect, the present application provides an electric device, comprising the secondary battery of the fourth aspect of the present application.

The positive electrode material provided above comprises a first lithium nickel oxide material, wherein the first lithium nickel oxide material comprises a polycrystalline particle. A porosity inside the polycrystalline particle is greater than or equal to 2 and less than or equal to 15%. In any CP cross-section of the polycrystalline particle, a distance between two adjacent pore edges inside the polycrystalline particle is 10nm to 100nm. Thus, cracking ratio of the positive electrode material during the processing of the electrode plate can be reduced, and an initial stress and a stress accumulation of new surface generated by the cracking during the cycle process can be significantly reduced, and particle toughness and particle strength can be improved. Meanwhile, sufficient support can be provided for the rigid structure of the material, and the collapse and crushing of the material particles can be reduced. Therefore, the stability of the bulk phase and the surface is improved at the material level, and the long-term cycle performance and safety performance of the material are improved.

**In** addition, the present application adopts the molten salt method to regulate the thermal field distribution and melting mode of the material during the sintering process. The molten salt added during the sintering process is difficult to volatilize, but flows along the grain boundaries as lava, and etches the grain boundaries to form relatively uniform pores. Therefore, the microstructure of the single crystal particle of the lithium nickel oxide material is changed, which reduces the internal stress of the material, thereby improving the toughness and durability of the material.

### BRIEF DESCRIPTION OF THE DRAWINGS

In order to more clearly illustrate technical solutions in embodiments of the present application and to more completely understand the present application and its beneficial effects, the following is a brief introduction to drawings required for the description of the embodiments. Apparently, the drawings described below are only some embodiments of the present application. For those skilled in the art, other drawings may be obtained based on these drawings without creative work.
FIG. 1 is an electron scanning image of a positive electrode material in Example 1.
FIG. 2 is a CP cross-section image of a positive electrode material in Example 1.

### DETAILED DESCRIPTION OF EMBODIMENTS

In order to facilitate understanding the present application, the present application will be described more comprehensively with reference to relevant embodiments. The following is a preferred embodiment of the present application. However, the present application may be implemented in many different forms and is not limited to the embodiments described herein. On the contrary, the purpose of providing these embodiments is to make the understanding of the disclosure of the present application more thorough and comprehensive.

Unless otherwise defined, all technical and scientific terms used herein have the same meaning as those commonly understood by technicians in the technical field of the present application. The terms used in the specification of the present application are only for the purpose of describing specific embodiments and are not intended to limit the present application.

The scope of the terms "and/or", "or/and", and "as well as/or" used herein includes any one of two or more related listed items, and further includes arbitrary and all combinations of related listed items, and the arbitrary and all combinations include any combination of any two related listed items, any more related listed items, or all related listed items. It should be noted that when at least three items are connected by at least two conjunctions selected from "and/or", "or/and", and "as well as/or", it should be understood that in the present application, the technical solution undoubtedly includes technical solutions of connecting by "logical and", and also undoubtedly includes technical solutions of connected by "logical or".

In the present application, the technical features described in an open form include closed technical solutions composed of the listed features, and further include open technical solutions containing the listed features.

In the present application, when it comes to the numerical range, unless otherwise specified, the above numerical range is deemed to be continuous and includes the minimum and maximum values of the range, as well as each value between such minimum and maximum values. Further, when the range refers to integers, each integer between the minimum and maximum values of the range is included. In addition, when multiple ranges are provided to describe features or characteristics, the ranges may be merged. In other words, unless otherwise specified, all ranges disclosed herein should be understood to include any and all sub-ranges included therein.

Only some numerical ranges are specifically disclosed herein. However, any lower limit may be combined with any upper limit to form an unspecified range; and any lower limit may be combined with other lower limits to form an unspecified range, and any upper limit may be combined with any other upper limit to form an unspecified range. In addition, each individually disclosed point or single value, as a lower limit or upper limit, may itself be combined with any other point or single value or with other lower limit or upper limit to form an unspecified range.

The temperature parameters in the present application, unless otherwise specified, are allowed to be suitable for both constant temperature treatment and treatment within a certain temperature range. The constant temperature treatment allows the temperature to fluctuate within the accuracy range of instrument control. Fluctuations within the range of ±5°C, ±4°C, ±3°C, ±2°C, and ±1°C are allowed.

In the present application, unless otherwise specified, size, particle size, and diameter generally refer to average values. In the present application, "granularity" and "particle size" have the same definition, both representing the average particle size of spheres or spheroids.

In the present application, the "suitable" in "suitable combination", "suitable method", "any suitable method", or the like, is based on the ability to implement the technical solution of the present application, solve the technical problems of the present application, and achieve expected technical effects of the present application.

In the present application, "further", "furthermore", "particularly", or the like, are used for describing purposes to indicate differences in content, but should not be understood as limiting the scope of protection of the present application.

In the present application, "optionally", "optional", "option" means optional, that is, it means selecting any one of the two parallel solutions of "yes" or "no". If there are multiple "optional" in a technical solution, unless otherwise specified and there is no contradiction or mutual restriction, each "optional" is independent.

In the description of the present application, "multiple" means at least two, such as two, three, or the like, unless otherwise clearly specified.

Unless otherwise specified, all embodiments and optional embodiments of the present application may be combined with each other to form a new technical solution. If there is no special description, all technical features and optional technical features of the present application may be combined with each other to form a new technical solution.

Unless otherwise specified, all steps of the present application may be performed sequentially or randomly, preferably sequentially.

In the present application, the terms "first", "second", "third", "fourth", or the like in "first lithium nickel oxide material", "second lithium nickel oxide material", "first lithium source", "first nickel-containing precursor", "first molten salt", "first mixed material", "first sintering treatment", "second lithium source", "second nickel-containing precursor", "second molten salt", "second mixed material", "second sintering treatment", "first sintering platform", "second sintering platform", "third sintering platform", "fourth sintering platform", or the like are only used for descriptive purposes and cannot be understood as indicating or implying relative importance or quantity, nor can they be understood as implicitly indicating the importance or quantity of the indicated technical features. Moreover, "first", "second", "third", "fourth", or the like, only serve the purpose of non-exhaustive enumeration and description, and it should be understood that they do not constitute a closed limitation on quantity.

Among high-nickel materials, lithium nickel cobalt manganese oxide is widely used. Although this material has a high energy density, the stability of bulk phase and surface structure is poor. During the preparation of the electrode plate, more broken particles may be produced, which will then react with the electrolyte solution to produce more irreversible phase changes, causing the material performance to deteriorate, and ultimately leading to poor long-term cycle performance and safety performance.

At present, the methods for improving particle strength are mainly concentrated at the precursor. Through the design of loose and porous precursor, the positive electrode material obtained by sintering may partially inherit this feature of the precursor. This method belongs to the front-terminal design. After a complex process, the characteristics of the precursor may be affected by the process formula during the processing. In the end, the positive electrode material has a large uncertainty in the inheritance effect of these advantages, and the improvement direction and inheritance weight cannot be completely positively correlated.

How to improve the stability of bulk phase and surface from the material level through the development of new processes and new formulas, reduce the cracking ratio of material particles under higher rolling strength of the electrode plate, and reduce the degree of particle cracking differentiation of the material during the cycle process has become a technical problem in the field of positive electrode materials of lithium-ion batteries.

Based on the above problems, the technical personnel of the present application have found through research that the cracking problem of the positive electrode material during the rolling process of the electrode plate is mainly due to the fact that when the material is subjected to pressure, it cannot relieve the local force of the transmission through the micro-deformation inside the particles, resulting in excessive point pressure that causes particle cracking. To solve the above problems, increasing the particle toughness, thus producing micro-deformation after pressure, and increasing the mortise and tenon effect between the primary particles may effectively improve the compressive strength of the particles. Therefore, the present application continuously adjusts the internal grain size, porosity, and orientation of the material through the molten salt method, reduces the cracking ratio of the material during the processing of the electrode plate, and significantly reduces the initial stress of the material and the stress accumulation of the new surface caused by cracking during the cycle, thereby improving the toughness of the particles.

In the first aspect, the present application provides a positive electrode material, comprising a first lithium nickel oxide material. The first lithium nickel oxide material contains a polycrystalline particle, a porosity inside the polycrystalline particle is denoted as d, 1%≤d≤15%. In any CP cross-section of the polycrystalline particle, a distance between two adjacent pore edges inside the polycrystalline particle is 5nm to 100nm.

Specifically, the positive electrode material comprises the first lithium nickel oxide material. The first lithium nickel oxide material comprises the polycrystalline particle. The porosity inside the polycrystalline particle is denoted as d, 2%≤d≤15%. In any CP cross-section of the polycrystalline particle, the distance between two adjacent pore edges inside the polycrystalline particle is 10nm to 100nm.

It should be noted that the "lithium nickel oxide material" mentioned in the present application refers to a material containing lithium, nickel and oxygen elements, but is not limited to the material containing only these three elements, and the material may further comprise other metal elements, which are not specifically limited.

The distance between two adjacent pore edges refers to the shortest distance between two adjacent pore edges.

The CP cross-section refers to the section prepared when the positive electrode material is subjected to a CP test.

In an embodiment, the porosity inside the polycrystalline particle may be, but is not limited to, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15% or a range between any two of the above values.

When the porosity inside the polycrystalline particle meets the above range, the initial stress of the particle after sintering is reduced, the mechanical impact resistance is improved, and the particle toughness is enhanced. The stress accumulation during the charge and discharge process becomes slow, reducing the risk of producing particle microcracks and grain cross-bending and pulverization. When the material is compact and has no pores or has few pores (d < 1%), the stress generated by the phase change during the charge and discharge process may not be released and may continue to accumulate, eventually causing the grains to bend or even pulverize. When the internal porosity is > 15%, the material structure is too loose, and the electrolyte solution penetrates through gaps between the particles, resulting in increased side reactions, irreversible phase changes in the material structure, and deterioration of performance.

The porosity inside the polycrystalline particle mentioned above may be measured by the minimum unit counting method, comprising specifically: first, making a grid consisting of squares with a side length of 1 nm, adjusting the transparency of the grid, and calibrating it with the CP image scale, and then covering the grid on the CP surface, and delineating the number of grids within the range of the pore from the grid, which is the cross-sectional area occupied by the pore.

In one embodiment, the distance between the edges of two adjacent pores inside the polycrystalline particle may be, but is not limited to 5nm, 10nm, 15nm, 20nm, 25nm, 30nm, 35nm, 40nm, 45nm, 50nm, 55nm, 60nm, 65nm, 70nm, 75nm, 80nm, 85nm, 90nm, 95nm, 100nm or the range between any two of the above distances. When the distance between the edges of two adjacent pores inside the polycrystalline particle is within the above range, it indicates that the pore distribution inside the polycrystalline particle is uniform.

When the distance between the edges of two adjacent pores in the polycrystalline particle is within the above range, there is sufficient support between the pores, so that the stability of the crystal structure is improved and the mechanical impact resistance is improved.

The distance between the edges of two adjacent pores in the polycrystalline particle mentioned above may be measured by the following method: in the CP diagram, two adjacent pores referring to two pores that are completely independent and have no intersection in a plane, and measuring the thickness of the pore wall at the thinnest part of the pore wall edge with the measuring scale perpendicular to the pore wall, which is the distance between the two pores.

It can be understood that the first lithium nickel oxide material comprises polycrystalline particles, the porosity inside the polycrystalline particles is greater than or equal to 2% and less than or equal to 15%, and in any CP cross-section image of the polycrystalline particles, the distance between the edges of two adjacent pores in the polycrystalline particles is 10nm to 100nm. Thus, the cracking ratio of the positive electrode material during the processing of the electrode plate may be reduced, and the initial stress and the stress accumulation of the new surface caused by cracking during the cycle may be significantly reduced, and the particle toughness and particle strength may be improved. Meanwhile, sufficient support may be provided for the rigid structure of the material to reduce the collapse and crushing of the material particles. Therefore, the stability of the bulk phase and surface is improved at the material level, and the long-term cycle performance and safety performance of the material are improved.

In some optional embodiments, the porosity d inside the polycrystalline particle satisfies: 2%≤d≤15%.

In some optional embodiments, the porosity d inside the polycrystalline particle satisfies: 2.3%≤d≤14.8%.

In some optional embodiments, the distance between the edges of two adjacent pores inside the polycrystalline particle is 10nm to 100nm.

In some optional embodiments, the distance between the edges of two adjacent pores inside the polycrystalline particle is 12nm to 98nm.

In some embodiments, the polycrystalline particle comprises a plurality of primary particles. In any CP cross-section of the polycrystalline particle, the angle between the direction of the long diameter of each primary particle and the direction of the diameter of the polycrystalline particle is 0° to 90°. For example, it may be, but not limited to 0°, 5°, 10°, 15°, 20°, 25°, 30°, 35°, 40°, 45°, 50°, 55°, 60°, 65°, 70°, 75°, 80°, 85°, 90° or the range between any two of the above angles. When the angle is in a range of 0° to 90°, it indicates that the orientation consistency of each primary particle contained in the polycrystalline particle is better, and during the phase change of the material, the stress generated when the orientation is consistent is small.

In some optional embodiments, the polycrystalline particle comprises a plurality of primary particles. In any CP cross-section of the polycrystalline particle, the angle between the direction of the long diameter of each primary particle and the direction of the diameter of the polycrystalline particle is 0° to 30°.

In one embodiment, in the above-mentioned CP cross-section, the angle between the direction of the long diameter of each primary particle and the direction of the diameter of the polycrystalline particle may be measured by the following method: selecting a CP cross-section passing through the center of the sphere, determining the long diameter of the primary particle by the cross method, connecting the center of the sphere and the end point of the long diameter close to the center of the sphere into a line segment and extending the line segment, and measuring the angle of ≤90° between the two line segments, which is the angle between the direction of the long diameter of the primary particle and the direction of the diameter of the polycrystalline particle.

In some embodiments, the polycrystalline particle comprises a plurality of primary particles, and each primary particle has the particle size of 200nm to 800nm. For example, it may be but not limited to 200nm, 250nm, 300nm, 350nm, 400nm, 450nm, 500nm, 550nm, 600nm, 650nm, 700nm, 750nm, 800nm or the range between any two of the above particle sizes. When the particle sizes of each primary particle are within the above range, the particle sizes of the primary particles are more concentrated, and it is easier to form a forward arrangement with a smaller angle in the particles, which helps to release the stress between particles, improve the stability of the material, and improve the performance.

In some embodiments, the polycrystalline particle has the single particle strength of > 90MPa; and the polycrystalline particle is in a deformation of < 21% before rupture, indicating that the compressive strength of the polycrystalline particle is effectively improved.

In some embodiments, the first lithium nickel oxide material has a chemical formula of Liₐ₁Niₓ₁Co_{y1}Mn_{z1}Q1ᵤ₁O₂, where 0.98≤a1≤1.60, 0.80≤x1≤1.00, 0.00≤y1≤0.12, 0.00≤z1≤0.10, 0≤u1≤0.007, and the Q1 element is a doping element.

In some embodiments, the Q1 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium, and tantalum.

In some embodiments, 0.98≤a1≤1.05, 0.82≤x1≤1.00, 0.00≤y1≤0.08, 0.00≤z1≤0.06, 0.0001≤u1≤0.005.

In one embodiment, the first lithium nickel oxide material has the median particle size of 9µm to 17µm. For example, it may be, but not limited to 9µm, 9.5µm, 10µm, 10.5µm, 11µm, 11.5µm, 12µm, 12.5µm, 13µm, 13.5µm, 14µm, 14.5µm, 15µm, 15.5µm, 16µm, 16.5µm, 17µm or the range between any two of the above particle sizes. When the median particle size of the first lithium nickel oxide material is within the above range, it is conducive to higher capacity while improving the compaction density. Particles within this particle size range have certain advantages in compressive strength, may ensure the stability of the particle structure, and reduce the risk of side reactions in subsequent batteries due to the crushing of particles to produce fresh interfaces.

In some optional embodiments, the specific surface area of the first lithium nickel oxide material is recorded as A1, and after being fractured by a pressure of 4.5T, the specific surface area of the first lithium nickel oxide material is recorded as A2, (A2-A1)/A1×100%≤40%. It indicates that after the particles are compressed, the degree of cracking or crushing is small, and the stability of the particle structure is high.

Optionally, 3.8≤(A2-A1)/A1×100%≤35.2%.

In some embodiments, the positive electrode material further comprises a second lithium nickel oxide material, and the second lithium nickel oxide material comprises a single crystal particle or a quasi-single crystal particle. Thus, the high capacity advantage of the single crystal and the long life advantage of the single crystal can be brought into play, and the material performance may be made more balanced by adjusting the proportion of the first lithium nickel oxide material and the second lithium nickel oxide material.

It should be noted that quasi-single crystal particle refers to a micro-crystal particle similar to a single crystal.

In some embodiments, the second lithium nickel oxide material has the chemical formula of Liₐ₂Niₓ₂Co_{y2}Mn_{z2}Q2ᵤ₂O₂, where 0.98≤a2≤1.60, 0.80≤x2≤1.00, 0.00≤y2≤0.12, 0.00≤z2≤0.10, 0≤u2≤0.007, and the Q2 element is a doping element.

In some optional embodiments, the Q2 element comprises one or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum.

In some optional embodiments, 0.98≤a2≤1.05, 0.82≤x2≤1.00, 0.00≤y2≤0.08, 0.00≤z2≤0.06, and 0.0001≤u2≤0.005.

In one embodiment, the second lithium nickel oxide material has the median particle size of 0.5µm to 6µm. For example, it may be but not limited to 0.5µm, 1µm, 1.5µm, 2µm, 2.5µm, 3µm, 3.5µm, 4µm, 4.5µm, 5µm, 5.5µm, 6µm or a range between any two of the above particle sizes. When the median particle size of the second lithium nickel oxide material is within the above range, the morphology of the single crystal material is clear and controllable, and it may be well mixed with large particles to fill gaps between the large particles and improve the compaction density of the mixed product.

In one embodiment, the first lithium nickel oxide material and the second lithium nickel oxide material in the positive electrode material is in a mass ratio of 1 to 10. For example, it may be, but not limited to 1, 1.5, 2, 2.5, 3, 3.5, 4, 4.5, 5, 5.5, 6, 6.5, 7, 7.5, 8, 8.5, 9, 9.5, 10 or the range between any two of the above numbers. When the mass ratio of the first lithium nickel oxide material and the second lithium nickel oxide material in the positive electrode material is within the above range, both the high capacity advantage of the polycrystalline large particles and the long cycle performance of the single crystal particle can be brought into play. After blending, the filling degree between the particles is greatly improved, the compaction density is improved, and the final energy density is improved. The performance of the sample after blending is better than the performance of the large and small particles alone.

In the second aspect, the present application provides a method for preparing the positive electrode material of the first aspect of the present application, comprising following steps:
subjecting a first mixed material comprising a first lithium source, a first nickel-containing precursor, a first molten salt and an optional Q1 source to a first sintering treatment to prepare the first lithium nickel oxide material; where the total molar amount of metal contained in the first molten salt to the total molar amount of metal contained in the first nickel-containing precursor is in a ratio of 0.005 to 0.08.

The total molar amount of metal contained in the first molten salt and the total molar amount of metal contained in the first nickel-containing precursor may be in a ratio of, but is not limited to, 0.005, 0.01, 0.015, 0.02, 0.025, 0.03, 0.035, 0.04, 0.45, 0.05, 0.055, 0.06, 0.065, 0.07, 0.075, 0.08 or a range between any two of the above values.

When the ratio of the total molar amount of metal contained in the first molten salt to the total molar amount of metal contained in the first nickel-containing precursor is within the above range, the impurities introduced by the molten salt itself may not affect the material, and may play a role in regulating the material structure.

Understandably, the present application adopts the molten salt method to regulate the thermal field distribution and melting mode during the sintering process of the material. The added molten salt is difficult to volatilize during the sintering process, but flows along the grain boundary as lava, etches the grain boundary, and forms relatively uniform pores. Therefore, the microstructure of the single crystal particle of the lithium nickel oxide material is changed, so that the internal stress of the material is reduced, thereby improving the toughness and durability of the material.

It should be noted that the molten salt added in the method provided by the present application is generally a high melting point salt, which is not easy to volatilize and has a certain chemical reaction inertness. The added molten salt only plays the role of etching the grain boundary and expanding the pores, and has no obvious effect on the surface morphology of the material.

It should be noted that, in the process of preparing the positive electrode material, if only oxide additives are added during sintering, according to the difference in sintering temperature, most of the additives may be coated on the surface of the material, and a small part may enter the grain boundary or lattice of the material, which is not conducive to the formation of pores.

In some embodiments, the first molten salt has the melting point of 400°C to 1400°C. For example, it may be, but not limited to 400°C, 500°C, 600°C, 700°C, 800°C, 900°C, 1000°C, 1100°C, 1200°C, 1300°C, 1400°C or the range between any two of the above melting points. Optionally, the first molten salt has the melting point of 400°C to 1000°C.

In some embodiments, the cation of the first molten salt comprises one or more of alkali metal and alkaline earth metal, and the anion comprises acid radical ion.

In some embodiments, the first molten salt comprises salts composed of acid radicals of elements selected from III, IV, V, VI main groups and a combination thereof.

In one embodiment, the first molten salt comprises one or more of lithium sulfate, lithium antimonate, lithium silicate, lithium selenate, and lithium phosphate.

In some embodiments, the first lithium source comprises one or more of lithium hydroxide, lithium carbonate, lithium nitrate, lithium oxalate, and lithium acetate.

In some embodiments, the first nickel-containing precursor has the chemical formula of [Niₓ₃Co_{y3}Mn_{z3}](OH)₂, where 0.80≤x3≤1.00, 0.00≤y3≤0.12, and 0.00≤z3≤0.10.

In one embodiment, the first nickel-containing precursor has the median particle size of 9µm to 17µm.

In some embodiments, the total molar amount of metal contained in the first molten salt and the first lithium source and the total molar amount of metal contained in the first nickel-containing precursor are in a ratio of 1.02-1.08. In one embodiment, the ratio of the total molar amount of metal contained in the first molten salt and the first lithium source to the total molar amount of metal contained in the first nickel-containing precursor may be, but is not limited to, 1.02, 1.025, 1.03, 1.035, 1.04, 1.045, 1.05, 1.055, 1.06, 1.065, 1.07, 1.075, 1.08 or a range between any two of the above values. In this way, the residual alkali of the material may be controlled within a controllable range, which may not affect the homogenization of the material, and may better play the role of flux and adjust the internal structure of the material.

In some optional embodiments, the Q1 source comprises one or more of oxides, hydroxides, carbonates, phosphates, and nitrates containing Q1 elements. The Q1 elements comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium, and tantalum.

In some embodiments, the first sintering treatment comprises a first sintering platform and a second sintering platform. The sintering temperature of the second sintering platform and the sintering temperature of the first sintering platform have a positive temperature difference of ≥200°C, and the sintering time of the second sintering platform and the sintering time of the first sintering platform have a positive time difference of ≥1h. Thus, impurities and waste gas generated in the material may be removed under the low temperature platform to achieve the purpose of purifying the initial reactants, and the reactants may be activated in the low temperature section to obtain intermediates with high reaction activity and reaction efficiency, so as to prepare for the next main reaction. The second sintering platform provides sufficient heat energy and gas for the reaction of the reactants, so that the reactants may react stably, crystallize, and obtain products.

In some optional embodiments, the first sintering platform is carried out at the sintering temperature of 550°C to 750°C. For example, it may be, but not limited to 550°C, 560°C, 570°C, 580°C, 590°C, 600°C, 610°C, 620°C, 630°C, 640°C, 650°C, 660°C, 670°C, 680°C, 690°C, 700°C, 710°C, 720°C, 730°C, 740°C, 750°C or the range between any two of the above temperatures. The sintering time is 3h to 5h. For example, it may be, but not limited to 3h, 3.1h, 3.2h, 3.3h, 3.4h, 3.5h, 3.6h, 3.7h, 3.8h, 3.9h, 4h, 4.1h, 4.2h, 4.3h, 4.4h, 4.5h, 4.6h, 4.7h, 4.8h, 4.9h, 5h or the range between any two of the above times. When the sintering temperature and sintering time of the first sintering platform are respectively in the above ranges, impurities and waste gas generated in the material may be removed under the low temperature platform to achieve the purpose of purifying the initial reactants, and the reactants may be activated in the low temperature section to obtain intermediates with high reaction activity and reaction efficiency, so as to prepare for the next main reaction.

It should be noted that the sintering temperature and sintering time of the first sintering platform may be combined in any appropriate manner, and may be selected from any sintering temperature and sintering time of the first sintering platform described in the present application.

In some optional embodiments, the second sintering platform is carried out at the sintering temperature of 750°C to 900°C. For example, it may be, but not limited to 750°C, 760°C, 770°C, 780°C, 790°C, 800°C, 810°C, 820°C, 830°C, 840°C, 850°C, 860°C, 870°C, 880°C, 890°C, 900°C or the range between any two of the above temperatures. The sintering time is 6h to 15h. For example, it may be, but not limited to 6h, 6.5h, 7h, 7.5h, 8h, 8.5h, 9h, 9.5h, 10h, 10.5h, 11h, 11.5h, 12h, 12.5h, 13h, 13.5h, 14h, 14.5h, 15h or the range between any two of the above times. When the sintering temperature and sintering time of the second sintering platform are respectively within the above ranges, the crystallinity of the material may be increased under the high temperature platform, and the orientation consistency of the crystal may be improved, which provides sufficient heat energy and gas for the reaction of the reactants, so that the reactants can react stably, melt, and crystallize to obtain the product.

It should be noted that the sintering temperature and sintering time of the second sintering platform may be combined in any appropriate manner, and may be selected from any sintering temperature and sintering time of the second sintering platform described in the present application.

In one embodiment, when the first mixed material does not contain the Q1 source or only contains a part of the Q1 source, the method further comprises: mixing the intermediate product obtained by the first sintering treatment with the Q1 source, and continuing the sintering treatment at 200°C to 350°C for 3h to 5h.

It should be noted that the "part of the Q1 source"" mentioned above means that the first mixed material does not contain all the required mass of the Q1 source.

In some optional embodiments, before the intermediate product obtained by the first sintering treatment is mixed with the Q1 source, the method further comprises the step of washing the intermediate product obtained by the first sintering treatment with water to remove free lithium on the surface of the intermediate product.

In one embodiment, the first lithium nickel oxide material obtained after the first sintering treatment may be dispersed and depolymerized by mechanical milling or airflow milling.

In some embodiments, the method further comprises: subjecting the second mixed material comprising the second lithium source, the second nickel-containing precursor, the second molten salt and the optional Q2 source to a second sintering treatment to prepare the second lithium nickel oxide material. The median particle size of the second nickel-containing precursor is smaller than the median particle size of the first nickel-containing precursor; where the total molar amount of metal contained in the second molten salt and the total molar amount of metal contained in the second nickel-containing precursor are in a ratio of 0.005 to 0.08.

The total molar amount of metal contained in the second molten salt and the total molar amount of metal contained in the second nickel-containing precursor may be in a ratio of, but is not limited to, 0.005, 0.01, 0.015, 0.02, 0.025, 0.03, 0.035, 0.04, 0.45, 0.05, 0.055, 0.06, 0.065, 0.07, 0.075, 0.08 or the range between any two of the above values.

When the ratio of the total molar amount of metal contained in the second molten salt to the total molar amount of metal contained in the second nickel-containing precursor is in the above range, the initial stress of the second positive electrode lithium nickel cobalt manganese oxide material is smaller, the polarization degree in the electrochemical reaction is lower, the stress accumulation is weakened, and the pulverization and grain cross-bending of the material during long-term cycling may be suppressed.

Understandably, the internal structure of particles of the second lithium nickel oxide material is optimized, the particles have a better phase reversibility, and the toughness of the particles is significantly improved.

In some embodiments, the second molten salt has the melting point of 400°C to 1400°C. For example, it may be, but not limited to 400°C, 500°C, 600°C, 700°C, 800°C, 900°C, 1000°C, 1100°C, 1200°C, 1300°C, 1400°C or the range between any two of the above melting points. Optionally, the second molten salt has the melting point of 400°C to 1000°C.

In some embodiments, the cation of the second molten salt comprises one or more of alkali metal and alkaline earth metal, and the anion comprises an acid radical ion.

In some embodiments, the second molten salt comprises salts composed of acid radicals of elements selected from III, IV, V, VI main groups and a combination thereof.

In one embodiment, the second molten salt comprises one or more of lithium sulfate, lithium antimonate, lithium silicate, lithium selenate, and lithium phosphate.

In some embodiments, the second lithium source comprises one or more of lithium hydroxide, lithium carbonate, lithium nitrate, lithium oxalate, and lithium acetate.

In some embodiments, the second nickel-containing precursor has the chemical formula of [Niₓ₄Co_{y4}Mn_{z4}](OH)₂, where 0.80≤x4≤1.00, 0.00≤y4≤0.12, 0.00≤z4≤0.10.

In one embodiment, the second nickel-containing precursor has the median particle size of 0.5µm to 6µm.

In some embodiments, the total molar amount of metal contained in the second molten salt and the second lithium source and the total molar amount of metal contained in the second nickel-containing precursor are in a ratio of 1.02 to 1.08. In one embodiment, the ratio of the total molar amount of metal contained in the second molten salt and the second lithium source to the total molar amount of metal contained in the second nickel-containing precursor may be, but is not limited to, 1.02, 1.025, 1.03, 1.035, 1.04, 1.045, 1.05, 1.055, 1.06, 1.065, 1.07, 1.075, 1.08 or a range between any two of the above values. In this way, it may be ensured that the material has sufficient lithium, so that the material can react to generate a positive electrode material with a better performance.

In some embodiments, the Q2 source comprises one or more of oxides, hydroxides, carbonates, phosphates, and nitrates containing the Q2 element. The Q2 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium, and tantalum.

In some embodiments, the second sintering treatment comprises a third sintering platform and a fourth sintering platform. The sintering temperature of the fourth sintering platform and the sintering temperature of the third sintering platform have the positive temperature difference of ≥200°C. The sintering time of the fourth sintering platform and the sintering time of the third sintering platform have the positive time difference of ≥1h. Therefore, the crystallization process is designed in stages, which may not only avoid energy waste, but also ensure that the obtained grains are uniform in size and exert better performance.

In one embodiment, the third sintering platform is carried out at the sintering temperature of 550°C to 750°C. For example, it may be, but not limited to 550°C, 560°C, 570°C, 580°C, 590°C, 600°C, 610°C, 620°C, 630°C, 640°C, 650°C, 660°C, 670°C, 680°C, 690°C, 700°C, 710°C, 720°C, 730°C, 740°C, 750°C or the range between any two of the above temperatures. The sintering time is 3h to 5h. For example, it may be, but not limited to 3h, 3.1h, 3.2h, 3.3h, 3.4h, 3.5h, 3.6h, 3.7h, 3.8h, 3.9h, 4h, 4.1h, 4.2h, 4.3h, 4.4h, 4.5h, 4.6h, 4.7h, 4.8h, 4.9h, 5h or the range between any two of the above times. When the sintering temperature and sintering time of the third sintering platform are respectively in the above ranges, the grains may be nucleated and grown under more suitable conditions, and thus the lithium salt has enough time and suitable temperature to diffuse into the material, so that the lithium atmosphere inside the material is uniform.

It should be noted that the sintering temperature and sintering time of the third sintering platform may be combined in any suitable way, and may be selected from any sintering temperature and sintering time of the third sintering platform described in the present application.

In some exemplary embodiments, the fourth sintering platform is carried out at the sintering temperature of 800°C to 950°C, for example, but not limited to 800°C, 810°C, 820°C, 830°C, 840°C, 850°C, 860°C, 870°C, 880°C, 890°C, 900°C, 910°C, 920°C, 930°C, 940°C, 950°C, or a range between any two of the above temperatures. The sintering time is 6h to 15h, for example, but not limited to 6h, 6.5h, 7h, 7.5h, 8h, 8.5h, 9h, 9.5h, 10h, 10.5h, 11h, 11.5h, 12h, 12.5h, 13h, 13.5h, 14h, 14.5h, 15h, or a range between any two of the above times. When the sintering temperature and sintering time of the fourth sintering platform are respectively within the above ranges, the grains may be nucleated and grown under more suitable conditions, and sufficient time and energy may be ensured to grow to the target size and morphology.

It should be noted that the sintering temperature and sintering time of the fourth sintering platform may be combined in any suitable manner, and may be selected from any sintering temperature and sintering time of the fourth sintering platform described in the present application.

In some embodiments, when the second mixed material does not contain the Q2 source or only contains a part of the Q2 source, the method further comprises: mixing the intermediate product obtained by the second sintering treatment with the Q2 source, and continuing the sintering treatment at 200°C-350°C for 3h to 5h.

It should be noted that the "part of the Q2 source" mentioned above refers that the second mixed material does not contain all the required mass of the Q2 source.

In some optional embodiments, before the intermediate product obtained by the second sintering treatment is mixed with the Q2 source, the method further comprises the step of washing the intermediate product obtained by the second sintering treatment with water to remove free lithium on the surface of the intermediate product.

In one embodiment, the second lithium nickel oxide material obtained after the second sintering treatment may be dispersed and depolymerized by airflow milling.

In the third aspect, the present application provides a positive electrode plate, comprising the positive electrode material of the first aspect or the positive electrode material prepared by the method of the second aspect.

In the fourth aspect, the present application provides a secondary battery, comprising the positive electrode plate of the third aspect.

The secondary battery of the present application comprises the above-mentioned positive electrode material and has excellent long-term cycle performance and safety performance.

In the fifth aspect, the present application provides an electric device, comprising the secondary battery of the fourth aspect. The electric device may be an electric car, an electric bicycle, an electric two-wheeled vehicle, an electric car power system, an energy storage system or a mobile storage device, or the like, without specific limitation.

The technical solution of the present application is described in detail below in conjunction with specific embodiments. It should be understood that these embodiments are only used to illustrate the present application and are not used to limit the scope of the present application. For experimental methods in the following embodiments where specific conditions are not specified, reference should be made to the instructions given in the present application, or to the experimental manuals or conventional conditions in the field, or to the conditions recommended by the manufacturer, or to experimental methods known in the field.

In the following specific examples, the measurement parameters of the raw material components may have slight deviations within the range of weighing accuracy unless otherwise specified. For temperature and time parameters, acceptable deviations caused by instrument test accuracy or operating accuracy are allowed.

### I. Preparation of positive electrode material

### Example 1

1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), 4.9g of zirconium oxide (ZrO₂, as the Q1 source) and 5.9g of lithium sulfate (Li₂SO₄, as the first molten salt) were weighed, stirred evenly at high speed, and then subjected to the first sintering treatment under oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 13h, and mechanical crushing was conducted to obtain the intermediate product A;
2) the intermediate product A obtained in step 1) was washed with water at a solid content of 60% for 5 min, then centrifuged, and then dried at a temperature of 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂;
4) referring to the above steps 1) to 3), the particle size of the [Ni_{0.9}Co_{0.06}Mn_{0.04}](OH)₂ precursor was changed to 3µm to prepare a second lithium nickel cobalt manganese oxide material with a median particle size of 2.8µm and a chemical formula of LiNi_{0.9}Co_{0.06}Mn_{0.04}Zr_{0.004}B_{0.003}O₂;
5) the first lithium nickel cobalt manganese oxide material and the second lithium nickel cobalt manganese oxide material prepared above were mixed in a mass ratio of 8:2 to obtain a positive electrode material.

### Example 2

The method of Example 2 is similar to the method of Example 1, except that the amount of lithium sulfate added is different. The method is specifically as follows:
1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), 4.9g of zirconium oxide (ZrO₂, as the Q1 source) and 8.85g of lithium sulfate (Li₂SO₄, as the first molten salt) were weighed, stirred evenly at high speed, and then subjected to the first sintering treatment under an oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 13h, and mechanical crushing was conducted to obtain intermediate product A;
2) the intermediate product A obtained in step 1) was washed with water at a solid content of 60% for 5 minutes, then centrifuged, and then dried at 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂;
4) referring to the above steps 1) to 3), the particle size of the [Ni_{0.9}Co_{0.06}Mn_{0.04}](OH)₂ precursor was changed to 3µm to prepare a second lithium nickel cobalt manganese oxide material with a median particle size of 2.8µm and a chemical formula of LiNi_{0.9}Co_{0.06}Mn_{0.04}Zr_{0.004}B_{0.003}O₂;
5) the first lithium nickel cobalt manganese oxide material and the second lithium nickel cobalt manganese oxide material prepared above were mixed in a mass ratio of 8:2 to obtain a positive electrode material.

### Example 3

The method of Example 3 is similar to the method of Example 1, except that the amount of lithium sulfate added is different. The method is specifically as follows:
1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), 4.9g of zirconium oxide (ZrO₂, as the Q1 source) and 11.8g of lithium sulfate (Li₂SO₄, as the first molten salt) were weighed, stirred evenly at high speed, and then subjected to the first sintering treatment under oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 13h, and mechanical crushing was conducted to obtain the intermediate product A;
2) the intermediate product A obtained in step 1) was washed with water at a solid content of 60% for 5 min, then centrifuged, and then dried at a temperature of 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂;
4) referring to the above steps 1) to 3), the particle size of the [Ni_{0.9}Co_{0.06}Mn_{0.04}](OH)₂ precursor was changed to 3µm to prepare a second lithium nickel cobalt manganese oxide material with a median particle size of 2.8µm and a chemical formula of LiNi_{0.9}Co_{0.06}Mn_{0.04}Zr_{0.004}B_{0.003}O₂;
5) the first lithium nickel cobalt manganese oxide material and the second lithium nickel cobalt manganese oxide material prepared above were mixed in a mass ratio of 8:2 to obtain a positive electrode material.

### Example 4

The method of Example 4 is similar to the method of Example 1, except that the amount of lithium sulfate added is different. The method is specifically as follows:
1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), 4.9g of zirconium oxide (ZrO₂, as the Q1 source) and 21.65g of lithium sulfate (Li₂SO₄, as the first molten salt) were weighed, stirred evenly at high speed, and then subjected to the first sintering treatment under oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 13h, and mechanical crushing was conducted to obtain the intermediate product A;
2) the intermediate product A obtained in step 1) was washed with water at a solid content of 60% for 5 min, then centrifuged, and then dried at a temperature of 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂;
4) referring to the above steps 1) to 3), the particle size of the [Ni_{0.9}Co_{0.06}Mn_{0.04}](OH)₂ precursor was changed to 3µm to prepare a second lithium nickel cobalt manganese oxide material with a median particle size of 2.8µm and a chemical formula of LiNi_{0.9}Co_{0.06}Mn_{0.04}Zr_{0.004}B_{0.003}O₂;
5) the first lithium nickel cobalt manganese oxide material and the second lithium nickel cobalt manganese oxide material prepared above were mixed in a mass ratio of 8:2 to obtain a positive electrode material.

### Example 5

Example 5 differs from Example 1 in that the second lithium nickel cobalt manganese oxide material is not prepared, and the obtained positive electrode material only comprises the first lithium nickel cobalt manganese oxide material. The method is specifically as follows:
1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), 4.9g of zirconium oxide (ZrO₂, as the Q1 source) and 33g of lithium sulfate (Li₂SO₄, as the first molten salt) were weighed , stirred evenly at high speed, and then subjected to the first sintering treatment under oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 13h, and mechanical crushing was conducted to obtain the intermediate product A;
2) the intermediate product A obtained in step 1) was washed with water at a solid content of 60% for 5 min, then centrifuged, and then dried at a temperature of 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂, which is the positive electrode material.

### Comparative example 1

The method for preparing the positive electrode material of Comparative example 1 is similar to the method for preparing the positive electrode material of Example 1, except that lithium sulfate is not added. The method is specifically as follows:
1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), and 4.9g of zirconium oxide (ZrO₂, as the Q1 source) were weighed, stirred evenly at high speed, and then subjected to the first sintering treatment under oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 10h, and mechanical crushing was conducted to obtain the intermediate product A;
2) the intermediate product A obtained in step 1) was washed with water at a solid content of 60% for 5 min, then centrifuged, and then dried at a temperature of 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂;
4) referring to the above steps 1) to 3), the particle size of the [Ni_{0.9}Co_{0.06}Mn_{0.04}](OH)₂ precursor was changed to 3µm to prepare a second lithium nickel cobalt manganese oxide material with a median particle size of 2.8µm and a chemical formula of LiNi_{0.9}Co_{0.06}Mn_{0.04}Zr_{0.004}B_{0.003}O₂;
5) the first lithium nickel cobalt manganese oxide material and the second lithium nickel cobalt manganese oxide material prepared above were mixed in a mass ratio of 8:2 to obtain a positive electrode material.

### Comparative example 2

The method for preparing the positive electrode material of Comparative example 2 is similar to the method for preparing the positive electrode material of Example 1, except that lithium sulfate is not added, but lithium hydroxide monohydrate is added instead of lithium sulfate. The method is specifically as follows:
1) 463g of lithium hydroxide monohydrate (as the first lithium source), 1000g of [Ni_{0.9}Co_{0.06}Mn_{0.04}](OH)₂ precursor with a particle size of 13.5µm (as the first nickel-containing precursor), 4.9g of zirconium oxide (ZrO₂, as the Q1 source) and 8.15g of lithium hydroxide monohydrate were weighed, stirred evenly at high speed, and then subjected to the first sintering treatment under oxygen atmosphere. The sintering treatment was specifically as follows: the obtained mixture passed through the first sintering platform at a temperature of 550°C for a sintering time of 4.5h; then the temperature was raised, the obtained mixture passed through the second sintering platform at a temperature of 785°C for a sintering time of 10h, and mechanical crushing was conducted to obtain the intermediate product A;
2) the intermediate product A obtained in step 1) was washed with water at a solid content of 60% for 5 min, then centrifuged, and then dried at a temperature of 150°C for 1 h to obtain intermediate product A*;
3) the intermediate product A* obtained in step 2) was high-speed mixed with H₃BO₃ (as the Q1 source) at a mass ratio of 1:0.001, and then sintered at 300°C in an oxygen atmosphere for 4 h to obtain a first lithium nickel cobalt manganese oxide material with a median particle size of 12.6µm and a chemical formula of LiNi_{0.9}Co_{0.06}Mn_{0.04}Zr_{0.004}B_{0.003}O₂;
4) referring to the above steps 1) to 3), the particle size of the [Ni_{0.9}Co_{0.06}Mn_{0.04}](OH)₂ precursor was changed to 3µm to prepare a second lithium nickel cobalt manganese oxide material with a median particle size of 2.8µm and a chemical formula of LiNi_{0.9}Co_{0.06}Mn_{0.04}Zr_{0.004}B_{0.003}O₂;
5) the first lithium nickel cobalt manganese oxide material and the second lithium nickel cobalt manganese oxide material prepared above were mixed in a mass ratio of 8:2 to obtain a positive electrode material.

The first lithium nickel cobalt manganese oxide materials obtained in the above Examples and Comparative examples were tested for following items: the porosity d inside the polycrystalline particle, the distance L between the edges of two adjacent pores inside the polycrystalline particle, and the angle θ between the direction of the diameter of each primary particle and the direction of the diameter of the polycrystalline particle in any CP cross-section of the polycrystalline particle. The specific results are shown in Table 1 below.

**Table 1**

| Group | d (%) | L (nm) | θ |
|---|---|---|---|
| Example 1 | 2.3 | 98 | 29 |
| Example 2 | 4.9 | 67 | 26 |
| Example 3 | 7.8 | 58 | 18 |
| Example 4 | 11.3 | 34 | 15 |
| Example 5 | 14.8 | 12 | 9 |
| Comparative example 1 | 0.8 | 3 | 36 |
| Comparative example 2 | 0.7 | 4 | 32 |

### II. Performance test

### 1. Morphology test

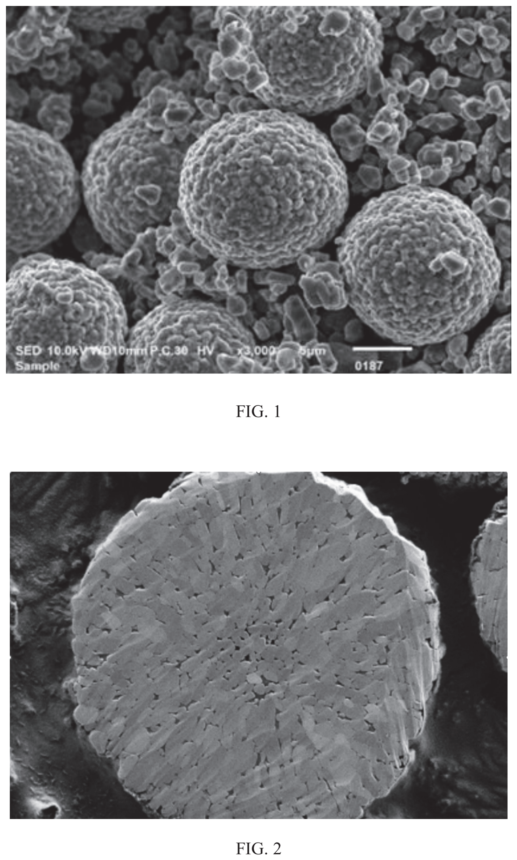

The positive electrode material prepared in Example 1 was scanned by an electron scanning electron microscope, and the result is shown in FIG. 1. As shown in FIG. 1, the prepared positive electrode material is a mixed material of large and small particles, the large particles are polycrystalline particles, and the small particles are single crystal particles.

The positive electrode material prepared in Example 1 was subjected to CP test, and the CP cross-section is shown in FIG. 2. As can be seen from FIG. 2, the large particles in the positive electrode material have a better internal radial structure and a relatively uniform pore distribution inside.

### 2. Deformation test

In the micro-mechanical testing machine test, the single particle strength of the polycrystalline particle was > 90MPa.

The deformation test method of the polycrystalline particle before rupture was:
MCT-210 micro compression tester was used in the test. First, MCT-210 test software was opened, the sample stage was clamped in the middle of the pressing plate without sliding, and the height of the sample stage was ensured to be at least 3 cm under the objective lens. On the host, the LED light switch was turned on, the handwheel at the lower right position of the host was shaken, and the height of the sample stage was adjusted until the sample particle image in the CCD image display window was clear. The start testing was clicked, the particle diameter was measured, and the image of the particle before compression was saved. The handwheel was rotated to move the particle vertex to the lens focus, and the sample stage was pushed to the right under the pressing plate, and the compression test was started. After the compression was completed, the sample stage was pushed to the left under the objective lens, and the handwheel was rotated until the image after compression was clear, and the image was saved.

The deformation test results of the above Examples and Comparative examples are shown in Table 2.

### 3. Particle strength test

MCT-210 micro compression tester was used in the test. First, MCT-210 test software was opened, the sample stage was clamped in the middle of the pressing plate without sliding, and the height of the sample stage was ensured to be at least 3 cm under the objective lens. On the host, the LED light switch was turned on, the handwheel at the lower right position of the host was shaken, and the height of the sample stage was adjusted until the sample particle image in the CCD image display window was clear. The start testing was clicked, the particle diameter was measured, and the image of the particle before compression was saved. The handwheel was rotated to move the particle vertex to the lens focus, and the sample stage was pushed to the right under the pressing plate, and the compression test was started. After the compression was completed, the sample stage was pushed to the left under the objective lens, the handwheel was rotated until the image after compression was clear, and the image was saved.

The particle strength test results of the above Examples and Comparative examples are shown in Table 2.

### 4. BET change test before and after rolling

The BET change of the positive electrode material was defined as β, the specific surface area of the positive electrode material before pressing was A1, and after the cold pressing process, the specific surface area of the positive electrode material became A2; where, β=(A2-A1)/A1×100%. The sample with a weight of 4 to 8 g was taken by a dynamic adsorption method. The sample was placed in a sample U-tube with a depth of 1/2 foot and a diameter of 12 mm, and degassed at 105°C for 2 hours. The adsorbed gas was 99.99% N₂ or He gas. The sample U-tube was placed in liquid N₂ at -196°C, and a sample with 0.22 m²/g was selected as a standard sample for testing.

The test results of the BET change after rolling of the examples in the above Examples and Comparative are shown in Table 2.

### 5. Capacity test

The positive electrode material, conductive agent acetylene black, and binder polyvinylidene fluoride (PVDF) prepared in each Example and Comparative example were mixed in a mass ratio of 96.5:1.5:2, and added with the solvent N-methylpyrrolidone (NMP). The mixture was then stirred evenly in a glove box using a high-speed stirrer to obtain the positive electrode material slurry. The positive electrode slurry was evenly coated on the positive electrode current collector aluminum foil, and then dried, and cold pressed to form a positive electrode plate, and the compacted density of the positive electrode plate was 3.6±0.5g/cm³.

A commercially available electrolyte was used as the battery electrolyte (1M LiPF₆ (EC/DMC, volume ratio of 1:1) solution). A lithium sheet was used as the negative electrode plate. The electrolyte, the negative electrode plate and the prepared positive electrode plate were assembled into a standard button battery.

At a voltage of 2.5V to 4.25V, the button battery was charged to 4.25V at a constant current of 0.1C, then charged to a current of ≤0.05mA at a constant voltage of 4.25V, and left to stand for 2min. The charge capacity at this time was recorded as C⁰. Then the button battery was discharged to 2.8V at a constant current of 0.1C, and the discharge capacity at this time was recorded as D⁰. The ratio of the discharge capacity D⁰ to the mass of the positive electrode active material was namely the gram capacity of the positive electrode active material. The first coulomb efficiency (%) of the positive electrode active material = D⁰/C⁰×100%.

The capacity test results of the above Examples and Comparative examples are shown in Table 2.

### 6. Cycle performance test

The standard button battery prepared above was used for cycle test. The high temperature cycle performance test was carried out under a constant temperature environment of 45°C. The battery was charged to 4.25V at a constant current of 1/3C, then charged to a current of ≤0.05mA at a constant voltage of 4.25V, left to stand for 5 minutes, and then discharged to 2.8V at a constant current of 1/3C. This was a charge and discharge cycle process. The discharge capacity at this time was the discharge capacity of the first cycle. Then the battery was subjected to 50 cycles of charge/discharge test according to the above method, and the discharge capacity of the 50^{th} cycle was detected.

The cycle performance test results of the above Examples and Comparative examples are shown in Table 2.

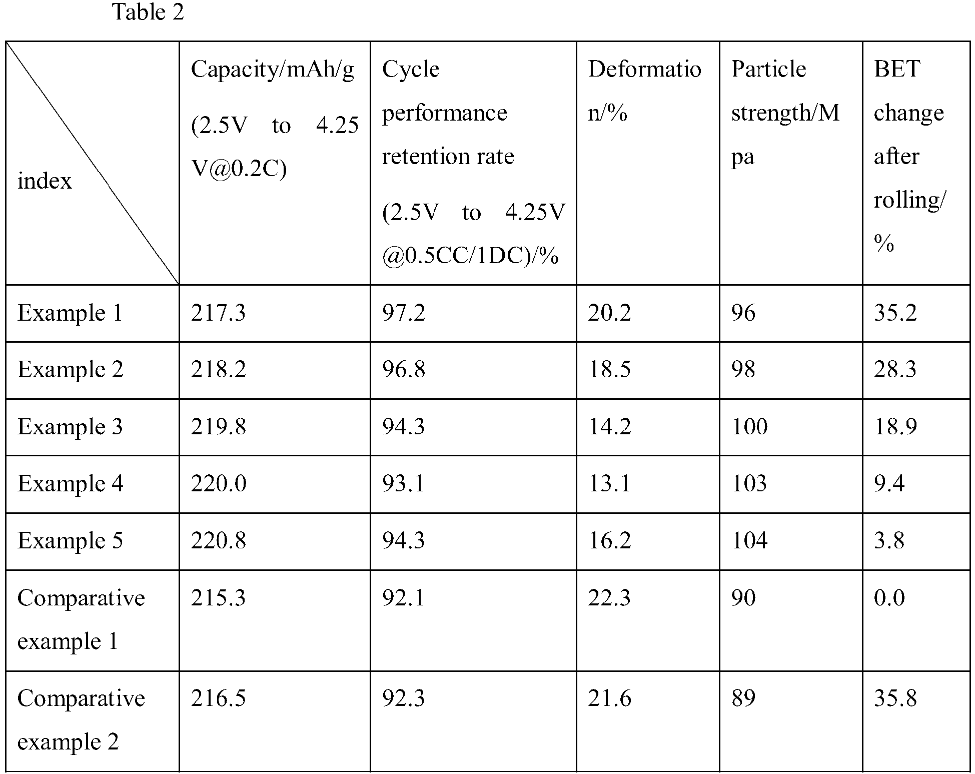

From the comparison of the results of Examples 1-5 in the table, it can be seen that as the amount of molten salt added increases, the deformation of the material after being compressed becomes smaller, the particle strength is improved to a certain extent, and the structural stability of the particles is improved. Due to the unique regulatory effect of the molten salt method on the primary particles inside the polycrystalline particles, the primary particles inside the large particles are arranged more orderly. With the increase of internal pores, the exposure of the active surface increases, and the capacity of the material shows an increasing trend, but its corresponding cycle performance increases first and then decreases. This is because there are too many pores inside the polycrystalline particles, which leads to a decrease in the mechanical stability of the contact between the particles. This reduction in mechanical properties may cause the particles to pulverize and crack during the cycle of the material, so the cycle capacity retention rate decreases.

From the comparison of the results of Example 1 and Comparative Example 1, it can be seen that when no molten salt is added during the preparation of the positive electrode material, the material structure is not optimized, the capacity of the material is slightly lower, and the cycle retention rate is average.

From the comparison of the results of Example 1 and Comparative Example 2, it can be seen that when a co-solvent with a low melting and boiling point is added during the preparation of the positive electrode material, the material capacity and cycle retention rate are improved, but the particle deformation is large, the toughness between the polycrystalline primary particles is poor, the particle strength is not high, and the degree of pulverization is high.

The technical features of the above-mentioned examples maybe combined arbitrarily. In order to make the description concise, not all possible combinations of the technical features in the above-mentioned embodiments are described. However, as long as there is no contradiction in the combination of these technical features, they should be considered to be within the scope of this specification.

The above-mentioned embodiments only express several implementation methods of the present application, and the description is relatively specific and detailed, but it cannot be understood as a limitation on the scope of the present application. It should be pointed out that for those skilled in the art, without departing from the concept of the present application, several deformations and improvements may be made, which all belong to the protection scope of the present application. Therefore, the protection scope of the patent of the present application shall be based on the attached claims.

## Claims

1. A positive electrode material, comprising a first lithium nickel oxide material, wherein the first lithium nickel oxide material contains a polycrystalline particle, and a porosity inside the polycrystalline particle is denoted as d, 1%≤d≤15%; in any CP cross-section of the polycrystalline particle, a distance between two adjacent pore edges inside the polycrystalline particle is 5nm to 100nm.

2. A positive electrode material, comprising a first lithium nickel oxide material, wherein the first lithium nickel oxide material contains a polycrystalline particle, and a porosity inside the polycrystalline particle is denoted as d, 2%≤d≤15%; in any CP cross-section of the polycrystalline particle, a distance between two adjacent pore edges inside the polycrystalline particle is 10nm to 100nm.

3. The positive electrode material according to claim 1 or 2, wherein the polycrystalline particle comprises at least one of the following features (1) to (3):
(1) the polycrystalline particle comprises a plurality of primary particles;
optionally, in any CP cross-section of the polycrystalline particle, an angle between a direction of a long diameter of each primary particle and a direction of a diameter of the polycrystalline particle is 0° to 90°, optionally, 0° to 30°;
optionally, each primary particle has a particle size of 200nm to 800nm;
(2) the polycrystalline particle is in a single particle strength of > 90Mpa;
(3) the polycrystalline particle is in a deformation of < 21% before rupture.

4. The positive electrode material according to any one of claims 1 to 3, wherein the first lithium nickel oxide material comprises at least one of the following features (1) to (3):
(1) the first lithium nickel oxide material has a chemical formula of Liₐ₁Niₓ₁Co_{y1}Mn_{z1}Q1ᵤ₁O₂, wherein 0.98≤a1≤1.60, 0.80≤x1≤1.00, 0.00≤y1≤0.12, 0.00≤z1≤0.10, 0≤u1≤0.007, and Q1 element is a doping element;
optionally, the Q1 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum;
optionally, 0.98≤a1≤1.05, 0.82≤x1≤1.00, 0.00≤y1≤0.08, 0.00≤z1≤0.06, 0.0001≤u1≤0.005;
(2) the first lithium nickel oxide material has a median particle size of 9µm to 17µm;
(3) a specific surface area of the first lithium nickel oxide material is denoted as A1, and after being fractured at a pressure of 4.5T, a specific surface area of the first lithium nickel oxide material is denoted as A2, (A2-A1)/A1×100%≤40%.

5. The positive electrode material according to claim 1 or 2, further comprising a second lithium nickel oxide material, wherein the second lithium nickel oxide material contains a single crystal particle or a quasi-single crystal particle;
optionally, the first lithium nickel oxide material and the second lithium nickel oxide material in the positive electrode material are in a mass ratio of 1 to 10.

6. The positive electrode material according to claim 5, wherein the second lithium nickel oxide material comprises at least one of the following features (1) to (2):
(1) the second lithium nickel oxide material has a chemical formula of Liₐ₂Niₓ₂Co_{y2}Mn_{z2}Q2ᵤ₂O₂, wherein 0.98≤a2≤1.60, 0.80≤x2≤1.00, 0.00≤y2≤0.12, 0.00≤z2≤0.10, 0≤u2≤0.007, and Q2 element is a doping element;
optionally, the Q2 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum;
optionally, 0.98≤a2≤1.05, 0.82≤x2≤1.00, 0.00≤y2≤0.08, 0.00≤z2≤0.06, 0.0001≤u2≤0.005;
(2) the second lithium nickel oxide material has a median particle size of 0.5µm to 6µm.

7. A method for preparing the positive electrode material according to any one of claims 1 to 6, comprising the following steps:
subjecting a first mixed material comprising a first lithium source, a first nickel-containing precursor, a first molten salt and an optional Q1 source to a first sintering treatment to prepare the first lithium nickel oxide material;
wherein a total molar amount of metal contained in the first molten salt and a total molar amount of metal contained in the first nickel-containing precursor are in a ratio of 0.005 to 0.08.

8. The method according to claim 7, wherein the method comprises at least one of the following conditions:
(1) the first molten salt has a melting point of 400°C to 1400°C, optionally 400°C to 1000°C; the first molten salt has a cation comprising one or more of alkali metal and alkaline earth metal, and the first molten salt has an anion comprising acid radical ion;
optionally, the first molten salt comprises one or more of lithium sulfate, lithium antimonate, lithium silicate, lithium selenate, and lithium phosphate;
(2) the first lithium source comprises one or more of lithium hydroxide, lithium carbonate, lithium nitrate, lithium oxalate, and lithium acetate;
(3) the first nickel-containing precursor has a chemical formula of [Niₓ₃Co_{y3}Mn_{z3}](OH)₂, wherein 0.80≤x₃≤1.00, 0.00≤y₃≤0.12, 0.00≤z₃≤0.10;
(4) the first nickel-containing precursor has a median particle size of 9µm to 17µm;
(5) a total molar amount of metal contained in the first molten salt and the first lithium source and a total molar amount of metal contained in the first nickel-containing precursor is in a ratio of 1.02 to 1.08;
(6) the Q1 source comprises one or more of oxides, hydroxides, carbonates, phosphates, and nitrates containing the Q1 element; the Q1 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium, and tantalum;
(7) the first sintering treatment comprises a first sintering platform and a second sintering platform, a sintering temperature of the second sintering platform and a sintering temperature of the first sintering platform have a positive temperature difference of ≥200°C, and a sintering time of the second sintering platform and a sintering time of the first sintering platform has a positive time difference of ≥1h;
optionally, the first sintering platform is carried out at the sintering temperature of 550°C to 750°C for 3h to 5h;
optionally, the second sintering platform is carried out at the sintering temperature of 750°C to 900°C for 6h to 15h;
(8) when the first mixed material does not contain the Q1 source or only contains a part of the Q1 source, the method further comprises: mixing an intermediate product obtained by the first sintering treatment with the Q1 source, and then continuing the sintering treatment at 200°C to 350°C for 3h to 5h.

9. The method according to any one of claims 7 to 8, further comprising:
subjecting a second mixed material comprising a second lithium source, a second nickel-containing precursor, a second molten salt and an optional Q2 source to a second sintering treatment to prepare the second lithium nickel oxide material; wherein the second nickel-containing precursor has a median particle size smaller than the median particle size of the first nickel-containing precursor;
wherein, a total molar amount of metal contained in the second molten salt and a total molar amount of metal contained in the second nickel-containing precursor is in a ratio of 0.005 to 0.08;
optionally, the second molten salt has a melting point of 400°C to 1400°C, optionally 400°C to 1000°C; the second molten salt has a cation comprising one or more of alkali metal and alkaline earth metal, and the second molten salt has an anion comprising acid radical ion;
optionally, the second molten salt comprises one or more of lithium sulfate, lithium antimonate, lithium silicate, lithium selenate, and lithium phosphate;
optionally, the second lithium source comprises one or more of lithium hydroxide, lithium carbonate, lithium nitrate, lithium oxalate, and lithium acetate;
optionally, the second nickel-containing precursor has a chemical formula of [Niₓ₄Co_{y4}Mn_{z4}](OH)₂, wherein 0.80≤x4≤1.00, 0.00≤y4≤0.12, and 0.00≤z4≤0.10;
optionally, the second nickel-containing precursor has a median particle size of 0.5µm to 6µm;
optionally, a total molar amount of metal contained in the second molten salt and the second lithium source and a total molar amount of metal contained in the second nickel-containing precursor are in a ratio of 1.02 to 1.08;
optionally, the Q2 source comprises two or more of oxides, hydroxides, carbonates, phosphates, and nitrates containing the Q2 element; the Q2 element comprises two or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum;
optionally, when the second mixed material does not contain the Q2 source or only comprises a part of the Q2 source, the method further comprises: mixing an intermediate product obtained by the second sintering treatment with the Q2 source, and then continuing the sintering treatment at 200°C to 350°C for 3h to 5h;
optionally, the second sintering treatment comprises a third sintering platform and a fourth sintering platform, a sintering temperature of the fourth sintering platform and a sintering temperature of the third sintering platform have a positive temperature difference of ≥200°C, and a sintering time of the fourth sintering platform and a sintering time of the third sintering platform have a positive time difference of ≥1h;
optionally, the third sintering platform is carried out at the sintering temperature of 550°C to 750°C for 3h to 5h;
optionally, the fourth sintering platform is carried out at the sintering temperature of 800°C to 950°C for 6h to 15h.

10. A positive electrode plate, comprising the positive electrode material according to any one of claims 1 to 6 or the positive electrode material prepared by the method according to any one of claims 7 to 9.

11. A secondary battery, comprising the positive electrode plate according to claim 10.
